Europäisches Patentamt

European Patent Office

Office européen des brevets

(11) Publication number: **0 200 111**
**B1**

(12) EUROPEAN PATENT SPECIFICATION

(45) Date of publication of patent specification: **10.01.90**

(51) Int. Cl.⁵: **G 21 C 3/32**

(21) Application number: **86105353.6**

(22) Date of filing: **17.04.86**

(54) Improved boiling water nuclear reactor fuel assembly.

(30) Priority: **02.05.85 US 729602**

(43) Date of publication of application:
**05.11.86 Bulletin 86/45**

(45) Publication of the grant of the patent:
**10.01.90 Bulletin 90/02**

(84) Designated Contracting States:
**CH DE IT LI SE**

(56) References cited:
**EP-A-0 036 142**
**EP-A-0 065 238**
**FR-A-2 161 038**

(73) Proprietor: **WESTINGHOUSE ELECTRIC CORPORATION**
**Westinghouse Building Gateway Center**
**Pittsburgh Pennsylvania 15222 (US)**

(72) Inventor: **Taleyarkhan, Rusi Pesi**
**21-G Murray Court**
**Pittsburgh Pennslyvania 15239 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to fuel assemblies for a nuclear reactor and, more particularly, to a fuel assembly for use in a boiling water reactor (BWR).

Typically, large amounts of energy are released through nuclear fission in a nuclear reactor, the energy being dissipated as heat in the elongate fuel elements or rods of the reactor. The heat is commonly removed by passing a coolant in heat exchange relation to the fuel rods and the heat thus transferred to the coolant is then extracted therefrom to be used in performing useful work.

In nuclear reactors generally, a plurality of fuel rods are grouped together to form a fuel assembly. Several such fuel assemblies are typically arranged in a matrix to form a nuclear reactor core capable of a self-sustained, nuclear fission reaction. The core is submersed in a flowing liquid, such as light water, that serves as the coolant for removing heat from the fuel rods and as a neutron moderator. Specifically, in a BWR, the fuel assemblies are typically grouped in clusters of four, and one control rod is associated with each cluster of four assemblies. Each cluster of four fuel assemblies surrounding a control rod is commonly referred to as a fuel cell of the reactor core.

A typical BWR fuel assembly in a cluster is ordinarily formed by a square array of elongate fuel rods. The fuel rods in the bundle are supported in laterally spaced-apart relationship and encircled by an outer tubular channel of generally rectangular cross-section. Examples of such fuel assemblies are illustrated and described in U.S. Patents Nos. 3,689,358; 3,802,995 and Canadian Patent No. 1,150,423.

In a fuel assembly of this type, the fuel rods in the central region of the bundle thereof may be undermoderated and over-enriched. In order to remedy this condition by increasing the flow of moderator water through this region of the assembly, several arrangements have been proposed. In the above-mentioned U.S. Patent No. 3,802,995, one or more elongate empty rods are substituted for fuel rods in the central region of the assembly. In the Canadian patent No. 1,150,423, an elongate centrally disposed stiffening device with vertical water passageways is used, whereas other earlier arrangements employ an elongate centrally disposed water-cross.

A water-cross is a structure of four radial panels formed by four generally L-shaped metal angles or sheet metal members which extend generally along most of the length of the fuel assembly and which are spaced apart by a series of interconnecting spacer elements. The interconnecting elements are formed in the sheet members of each panel so as to extend therebetween in aligned, contacting pairs which are connected, e.g. welded, together to ensure that the spacing between the sheet members of each panel is accurately maintained. Thus, a central water-cross which forms a cruciform water-flow channel divides the interior of the outer channel of the fuel assembly into four separate elongate compartments or sub-channels, thus dividing also the bundle of fuel rods into four mini-bundles disposed in the respective compartments. The cruciform channel provides a centrally disposed cross-shaped path for the flow of sub-cooled neutron-moderating water through the channel but separated from the fuel rods in the mini-bundles.

In order to provide for hydraulic pressure equalization among the mini-bundles of fuel rods in the fuel assembly, one of the earlier arrangements provided coolant flow communication between adjacent mini-bundles through openings defined by the pairs of interconnecting spacer elements mentioned above, whereas in another earlier arrangement interconnecting dimples were used as spacers while coolant flow communication was provided through openings formed in outer longitudinal ribs extending between and interconnecting the outer channel and the radial ends of the water-cross panels. In both instances, however, it was felt necessary to prevent the mixing of near-boiling coolant flowing within the fuel rod mini-bundles with sub-cooled moderator flowing through the central water-cross.

While the above-mentioned arrangements assure a desired hydraulic pressure equalization among the mini-bundles of fuel rods, other problems have been recognized which, if left uncorrected, could detrimentally affect the fuel rod bundle of the assembly and the structural integrity of the water-cross. These problems relate generally to an inadequate critical heat flux (CHF) margin in some axial regions along the fuel rod bundle, and the occurrence of high static pressure loads which can cause dimple weld failure in the water-cross.

As regard the CHF problems, it is generally known that CHF occurs when the liquid film cooling a heated surface dries up or gets washed away so as to leave a dry path. Under BWR operating conditions, the location where a dry heated surface is most likely to occur lies towards the exit of the heated region of the fuel assembly.

With respect to structural and hydraulic problems of the BWR fuel assembly, conventionally the water-cross inlet is designed with flow restrictions such that approximately 9 to 10 percent of the total bundle coolant flow enters the water-cross. However, since there is little or no flow restriction at the outlet of the water-cross, the largest mean stresses (static pressure difference between mini-bundle and water-cross) occur at its inlet region. Hence, the possibility of fatigue-loading induced failure is greatest in the inlet region of the water-cross. Indeed, failures of the dimple welds holding the water-cross panels together have occurred at the inlet during testing.

For instance, one earlier water-cross design has inlet holes approximately 3.5 mm in diameter while there is no restriction at its outlet. Crud buildup occurring during operation can further reduce the small cross-sectional flow areas of the inlet holes, and even small flow-area reductions can lead to substantial increases in orificing (hydraulic loss) which, in turn, will lead to even larger pressure losses at the inlet. Hence, less coolant will tend to enter the water-cross, thus creating a possibility of moderator boiling as well as increased static pressure loading. In other words, the fluid static pressure difference between the mini-bundles and the water-cross would increase, thus worsening the situation. Heretofore, fluid pressure in the mini-bundles has exceeded the fluid pressure in the water-cross at all axial locations along a fuel assembly. Thus, if, at some point, fatigue loading or some other mechanism causes dimple weld failure, fluid would enter the water-cross from the adjacent mini-bundle region. The rate of flow being diverted into the water-cross would depend on several factors, such as size of opening, pressure differences, and so forth, but at any rate such a diversion causes depletion of fluid in the mini-bundles, thus leading to a degradation of fuel rod cooling and a reduction in the CHF margin. The consequences of such a situation could mean undesirable operational penalties.

It is the principal object of the invention to alleviate these problems, and the invention accordingly resides in a nuclear fuel assembly including an array of elongate fuel rods disposed side-by-side, an outer flow channel surrounding said array of fuel rods for directing a coolant moderator fluid therethrough, and a hollow watercross which is disposed and extends axially within the outer flow channel and comprises a plurality of hollow panels extending radially from a longitudinal central axis of the water-cross and dividing the interior of the outer flow channel into longitudinal sub-channels each containing a fuel-rod subassembly consisting of a fraction of the number of fuel rods in said array, each of said hollow panels being formed by a pair of substantially parallel spaced sheet members connected to each other at their radially outer ends and connected at their radially inner ends to the adjacent sheet members of the respective adjoining panels so as to define a cruciform coolant/moderator flow channel extending through the water-cross and having an inlet and an outlet at the opposite ends thereof, characterized in that said outlet of the cruciform flow channel has a cross-sectional open flow area less than the cross-sectional open flow area of said inlet so as to distribute hydraulic losses between said inlet and outlet of the water-cross.

The characterizing feature as defined above reduces static pressure loads in the water-cross and greatly reduces the possibility of fatigue failure. Whereas, previously, hydraulic losses occurred substantially only at the water-cross inlet, the inlet flow area in the water-cross embodying the invention is greater than the outlet flow area. For instance, the inlet flow area might be approximately 3 cm² and the outlet flow area might be approximately 2.25 cm², based on hole diameter sizes of approximately 0.53 cm and 0.45 cm, respectively. With these flow area sizes, small area decrements due to crud buildup would tend to have a small impact on the hydraulic loss coefficients.

Another benefit derived from the above feature is that after about the first meter or so in the axial direction from the inlet of the water-cross, the direction of means-stress reverses, that is to say, the fluid pressure in the water-cross becomes greater than that in the mini-bundles, a condition which never occurs throughout the entire length of the previous designs of water-crosses with high inlet hydraulic losses, or orificing. Therefore, if any dimple welds were to fail at any location beyond the point where mean-stress reversal occurs, liquid from the water-cross would be diverted into the mini-bundles with no ill effect at all.

Indeed, it has been discovered that an advantage can be obtained by providing for some of the cooler liquid within the water-cross to be deliberately diverted into and mixed with the near-boiling coolant within the regions containing the mini-bundles.

Accordingly, in the fuel assembly embodying the invention, the cross-sectional open flow area of the outlet of the cruciform flow channel through the water-cross is sufficiently less than the cross-sectional open flow area of the inlet thereof to maintain a positive pressure gradient in the coolant/moderator flow through the cruciform flow channel relative to the coolant/moderator flow through the respective sub-channels in the outer flow channel, and the sheet members defining the cruciform flow channel are provided with means, such as holes, enabling some of the coolant/moderator within the cruciform flow channel to pass into the sub-channels at a location nearer to the outlet end than to the inlet end of the water-cross.

This feature of deliberately diverting some of the cooler liquid from the water-cross into the outer channel at a region of the fuel assembly where the CHF margin ordinarily is lowest, namely, nearer to the outlet end, has been found to be very beneficial insofar as it improves the CHF margin considerably and, as calculations indicate, can result in a 10 to 20% increase in CHF, depending upon the given power profile.

A preferred embodiment of the invention will now be described, by way of example only, with reference to the accompanying drawings, in which:

Fig. 1 is an elevational view, with parts broken away and sectioned for clarity, of a BWR nuclear fuel assembly embodying the invention;

Fig. 2 is an enlarged top plan view of the fuel assembly as seen along line 2—2 of Fig. 1;

Fig. 3 is an enlarged bottom plan view of the fuel assembly as seen along line 3—3 of Fig. 1;

Fig. 4 is a cross-sectional view of the fuel assembly taken along line 4—4 of Fig. 1, showing the fuel-rod bundle divided by the water-cross into mini-bundles, a grid surrounding one of the mini-bundles being shown in full, and similar grids surrounding the other three mini-bundles being shown in outline;

Fig. 5 is a cross-sectional view of the fuel assembly taken along line 5—5 of Fig. 1, showing in cross-section the dimples interconnecting the sheet members of the water-cross and showing in full the spaced ribs on the outer channel to which are attached the outer ends of the water-cross;

Fig. 6 is an enlarged perspective view, with parts broken away for clarity, of the water-cross of the fuel assembly shown in Fig. 1; and

Fig. 7 is an enlarged cross-sectional view of the water-cross taken along line 7—7 of Fig. 6.

In the following description, like reference characters designate like or corresponding parts throughout the several views of the drawings, and terms such as "forward", "rearward", "left", "right", "upwardly", "downwardly", and the like are employed as words of convenience not to be be construed as limiting terms.

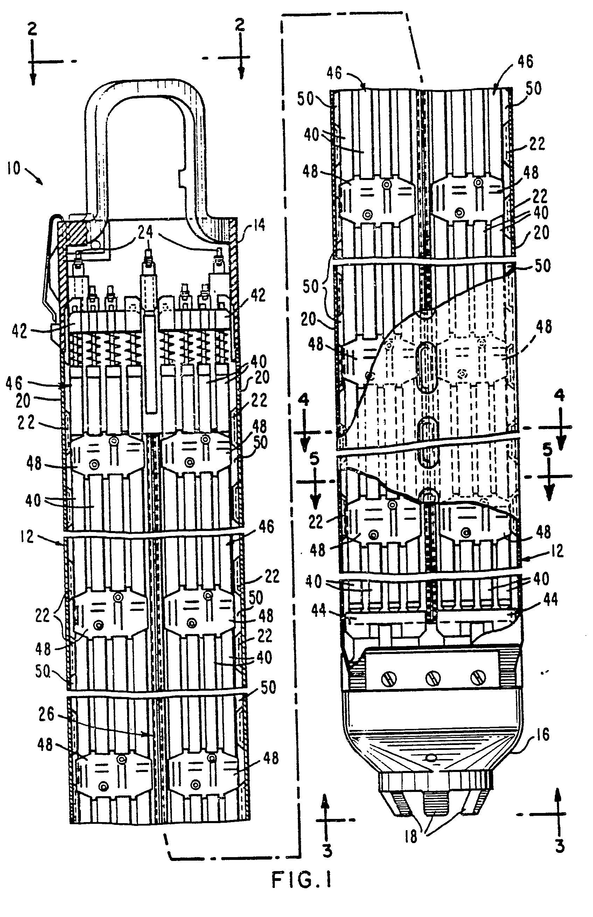

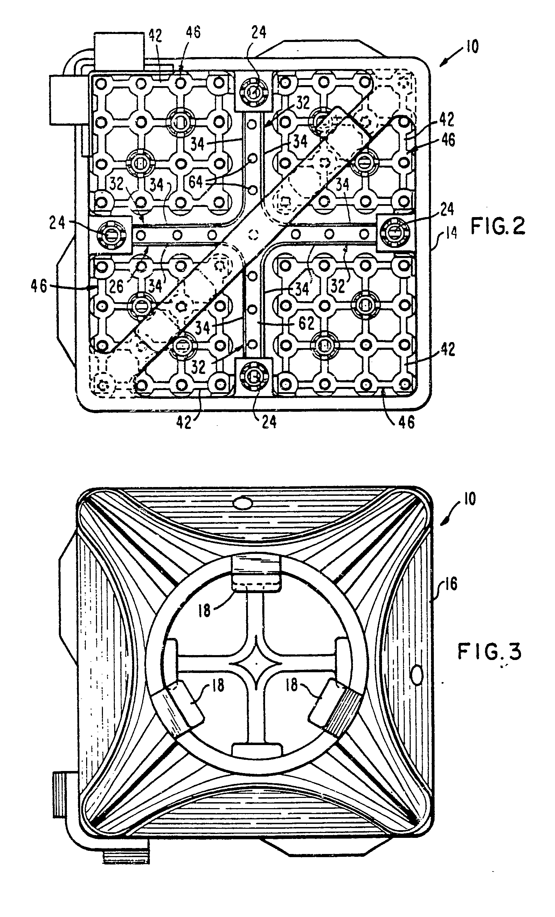

Referring now to the drawings, and particularly to Figs. 1 to 3, there is shown a nuclear fuel assembly, generally designated 10, for a boiling water nuclear power reactor (BWR). The fuel assembly 10 includes an elongate outer tubular flow channel 12 that extends along substantially the entire length of the fuel assembly 10 and connects an upper support fixture or top nozzle 14 with a lower base or bottom nozzle 16. The bottom nozzle 16 which serves as an inlet for coolant flow into the outer channel 12 of the fuel assembly 10 includes a plurality of legs 18 for guiding the bottom nozzle 16 and the fuel assembly 10 into a reactor core support plate (not shown) or into fuel storage racks, for example in a spent-fuel pool.

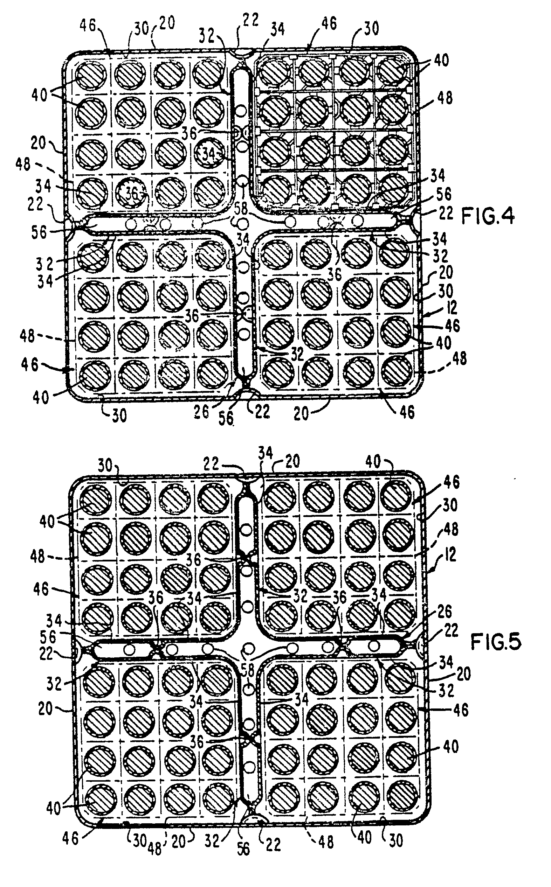

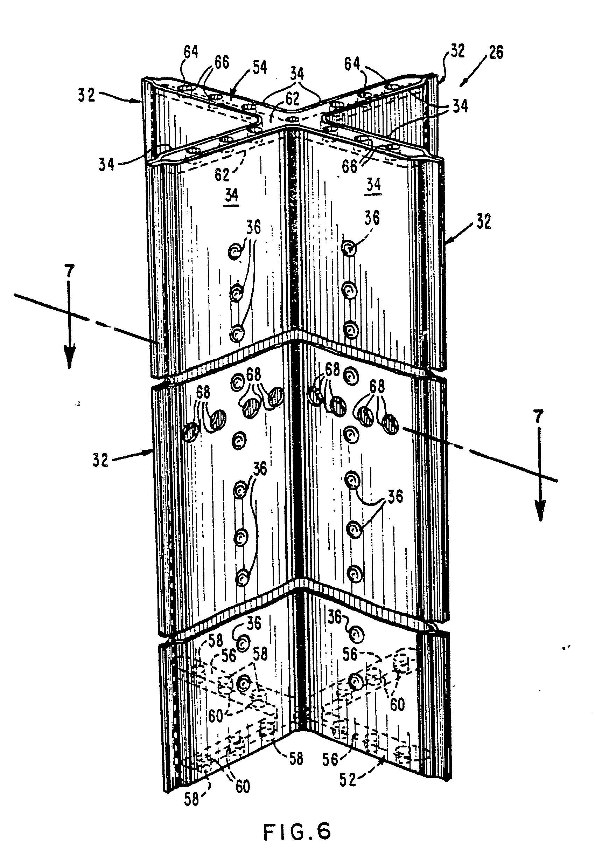

The outer flow channel 12 (see also Figs. 4 and 5), generally of rectangular cross-section, is made up of four interconnected vertical walls 20 each displaced about ninety degrees from the next. Formed in a spaced-apart relationship in, and extending in a vertical row at a central location along, the inner surface of each wall 20 of the outer flow channel 12, is a plurality of structural ribs 22. The outer flow channel 12, and thus the ribs 22 therein, preferably are formed from a metallic material, such as an alloy of zirconium, commonly referred to as Zircaloy. Above the upper ends of the structural ribs 22, a plurality of upwardly extending attachment studs 24 fixed on the walls 20 of the outer flow channel 12 are used to connect tne top nozzle 14 to the channel 12.

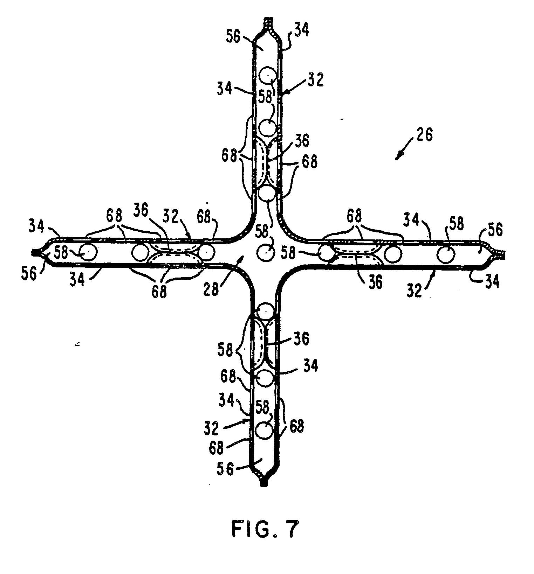

For improving neutron moderation and economy, a hollow water-cross, as seen in Figs 4 to 7 and generally designated 26, extends axially through the outer channel 12 so as to provide an open inner channel 28 for coolant/moderator flow through the fuel assembly 10 and to divide the fuel assembly into four separate, elongate compartments or longitudinal sub-channels 30. The water-cross 26 has a plurality of four radial panels 32 formed by four elongate, generally L-shaped metal angles or sheet members 34 which extend generally along the entire length of the channel 12 and are interconnected and spaced apart by a series of elements in the form of dimples 36 formed in the sheet members 34 of each panel 32 and extending therebetween. The dimples 36 are disposed in a vertical column along the axial length of the sheet members 34. Preferably, the dimples 36 in each of the sheet members 34 are laterally and vertically aligned with corresponding dimples 36 in adjacent sheet members 34 (Figs. 6 and 7) in order to provide pairs of opposed dimples that contact each other along the lengths of the sheet members to maintain the facing portions of the members in a proper spaced-apart relationship. The pairs of contacting dimples 36 are connected together such as by welding to ensure that the spacing between the sheet members 34 forming the panels 32 of the central water-cross 26 is accurately maintained.

The hollow water-cross 26 is mounted on the angularly displaced walls 20 of the outer channel 12. Preferably, the outer, elongate lateral ends of the panels 32 of the water-cross 26 are connected, e.g. welded, to the structural ribs 22 along the lengths thereof in order to securely retain the water-cross 26 in its desired central position within the fuel assembly 10. The panels define the cruciform channel 28 which extends the axial length of the hollow water-cross 26.

Disposed within the outer channel 12 is a bundle of fuel rods 40 which, in the illustrated embodiment, number sixty-four and form an 8 × 8 array. The fuel rod bundle is, in turn, separated into four mini-bundles thereof by the water-cross 26. The fuel rods 40 of each mini-bundle, being sixteen in number in a 4 × 4 array, extend in laterally spaced-apart relationship between an upper tie plate 42 and a lower tie plate 44 and connected together with the tie plates, comprises a separate fuel rod subassembly 46 within each of the compartments 30 of the channel 12. A plurality of grids 48 axially spaced along the fuel rods 40 of each fuel rod subassembly 46 maintain the fuel rods in their laterally spaced relationships. Coolant flow paths and flow communication are provided between the fuel rods subassemblies 46 in the respective separate compartments 30 of the fuel assembly 10 by a plurality of openings 50 formed between each of the structural ribs 22 along the lengths thereof. Coolant flow through the openings 50 serves to equalize the hydraulic pressure between the four separate compartments 30, thereby minimizing the possibility of thermal hydrodynamic instability between the separate fuel rod subassemblies 46.

The above-described basic components of the BWR fuel assembly 10 are known in the prior art and have been discussed in sufficient detail herein to enable one skilled in the art to understand the teachings of the invention.

Features for Improved Structural and Hydraulic Characteristics

Referring again to Figs. 4 to 7, the features incorporated in the water-cross 26 to provide improved structural and hydraulic characteristics comprise bottom and top closure means, generally indicated as 52 and 54, respectively, connected with the bottom and top ends of the sheet members 34 of the water-cross. The top closure means 54 limits the outlet of the water-cross 26 to an open area less than the open area of the inlet thereof as limited by the bottom closure means 52. In this manner, the hydraulic losses incurred in the water-cross 26 are distributed between the inlet and outlet thereof such that a positive pressure gradient is maintained in the sub-cooled moderator flow through the cruciform flow channel 28 relative to the coolant/moderator flow through the fuel rod subassemblies 46 in the outer flow channel 12.

More particularly, the bottom closure means 52 disposed between the sheet members 34 of the water-cross 26 at the inlet thereof takes the form of perforated straps or plates 56 having a plurality of holes 58 defined therein by a plurality of short tubes 60 (see Fig. 6) which communicate with the inner flow channel 28 of the water-cross 26. Likewise, the top closure means 54 disposed between the sheet members 34 of the water-cross 26 at the outlet thereof also takes the form of perforated straps or plates 62 having a plurality of holes 64 defined therein by another plurality of short tubes 66 which communicate with the inner flow channel 28 of the water-cross 26. The top holes 64 in the top perforated plates 62 are each of a predetermined diameter size which is less than the predetermined diameter size of each of the bottom holes 58 in the bottom perforated plates 56. Such relationship between the bottom and top holes 58, 64 which distributes the hydraulic losses such that greater loss is experienced at the outlet than at the inlet of the water-cross reduces the static pressure loads at the inlet and the risk of failure of dimple welds which interconnect the pairs of sheet members 34 of the water-cross 26.

Features for Improved CHF Characteristics

As seen in Figs. 6 and 7, the features incorporated in the water-cross 26 which provide the improved CHF characteristics comprise means in the form of a series of holes 68 defined in the sheet members 34 of the water-cross nearer to the top outlet ends at the upper tie plates 42 of the fuel rod subassemblies 46 than to the bottom inlet ends at the lower tie plates 44 thereof. These holes 68 permit the supply of a portion of the sub-cooled moderator flow from the inner flow channel 28 in the water-cross 26 to the outer flow channel 12 surrounding the fuel rods 40. It is at the upper regions of the fuel rod subassemblies 46 where dry surfaces are most likely to occur and thus where the CHF characteristics can most desirably be improved by the addition of some sub-cooled moderator flow from the watercross channel 28.

Specifically, the holes 68 are defined in each of the sheet members 34 of the water-cross 26 and are aligned at substantially the same axial height along the water-cross, which is at about the fifth one of the spacer grids 48 up from the bottom of each subassembly 46. Also, the holes 68 in each respective pair of the sheet members 34 forming one of the water-cross panels 32 are aligned with one another.

## Claims

1. A nuclear fuel assembly (10) including an array of elongate fuel rods (40) disposed side-by-side, an outer flow channel (12) surrounding said array of fuel rods for directing a coolant/moderator fluid therethrough, and a hollow water-cross (26) which is disposed and extends axially within the outer flow channel and comprises a plurality of hollow panels (32) extending radially from a longitudinal central axis of the water-cross and dividing the interior of the outer flow channel into longitudinal sub-channels each containing a fuel-rod subassembly (46) consisting of a fraction of the number of fuel rods in said array, each of said hollow panels being formed a pair of substantially parallel spaced sheet members (34) connected to each other at their radially outer ends and connected at their radially inner ends to the adjacent sheet members of the respective adjoining panels so as to define a cruciform coolant/moderator flow channel extending through the water-cross and having an inlet (52) and an outlet (54) at the opposite ends thereof, characterized in that said outlet of the cruciform flow channel (28) has a cross-sectional open flow area (64) less than the cross-sectional open flow area (58) of said inlet so as to distribute hydraulic losses between said inlet and outlet of the water-cross (26).

2. A nuclear fuel assembly according to claim 1, characterized inn that said water-cross (26) includes outlet closure means (54) substantially closing the outlet of the cruciform flow channel (28) and having formed therethrough a plurality of holes (64) which communicate with said cruciform flow channel (28).

3. A nuclear fuel assembly according to claim 2, characterized in that said water-cross (26) includes inlet closure means (52) substantially closing the inlet of said cruciform flow channel (28) and having formed therethrough a plurality of holes (58) which communicate with the cruciform flow channel (28), the holes (64) in said outlet closure means (54) having a total cross-sectional flow area less than that of the holes (58) in said inlet closure means (52).

4. A nuclear fuel assembly according to claim 3, characterized in that the inlet and outlet closure means (52, 54) comprise perforated plates (56, 62) spanning the spaces between said sheet members (34) adjacent the inlet and outlet ends of the water-cross (26).

5. A nuclear fuel assembly according to claim 1, 2, 3 or 4, characterized in that the cross-sectional open flow area of said outlet is sufficiently less than the cross-sectional open flow area of said inlet to maintain a positive pressure gradient in the coolant/moderator flow through the cruciform flow channel (28) within the water-cross (26) relative to the coolant/moderator flow through the respective sub-channels (30) within said outer flow channel (12).

6. A nuclear fuel assembly according to claim 5, characterized in that said sheet members (34) defining the cruciform flow channel (28) have formed therein means (68) for enabling some of the coolant/moderator within the cruciform flow channel to pass into said sub-channels (30) at a location nearer to the outlet end than to the inlet end of the water-cross (26).

7. A nuclear fuel assembly according to claim 6, characterized in that the fuel-rod subassembly (46) in each of said sub-channels (30) includes a plurality of support grids (48) spaced apart in the longitudinal direction of the fuel-rod subassembly and laterally supporting the fuel rods therein, said location being adjacent the support grid nearest the outlet end of the water-cross (26).

8. A nuclear fuel assembly according to claim 6 or 7, characterized in that said means (68) for enabling some coolant/moderator to pass from the cruciform flow channel into said sub-channels (30) of the outer flow channel (12) are holes (68) formed in the sheet members (34) of the water-cross (26).

9. A nuclear fuel assembly according to claim 8, characterized in that said holes (68) are substantially aligned with each other at the same level between the inlet and outlet ends of said water-cross (26).

**Patentansprüche**

1. Kernbrennelement (10) mit einer Anordnung von langgestreckten, nebeneinander angeordneten Brennstäben (40), einen die Anordnung von Brennstäben umschließenden äußeren Strömungskasten (12) zum Hindurchleiten eines Kühlmittels/Moderators, und mit einem innerhalb des äußeren Strömungskastens angeordneten und darin axial verlaufenden hohlen Wasserkreuz (26), das eine Mehrzahl hohler Platten (32) aufweist, die radial von einer längsverlaufenden Mittelachse des Wasserkreuzes wegragen und das Innere des äußeren Strömungskastens in längsverlaufende Teilkanäle unterteilt, die jeweils ein aus einem Teil der Anzahl der Brennstäbe in der Anordnung bestehendes Brennstabteilbündel (46) enthält, wobei jede der hohlen Platten aus zwei mit Abstand etwa parallel verlaufenden und an ihren radial äußeren Enden miteinander verbundenen Blechteilen (34) gebildet ist, die an ihren radial inneren Enden mit den benachbarten Blechteilen angerenzender Platten verbunden sind, um einen kreuzförmigen Kühlmittel/Moderator-Strömungskanal zu bilden, der durch das Wasserkreuz hindurchverläuft und einen Einlaß (52) und einen Auslaß (54) an dessen entgegengesetzten Enden aufweist, dadurch gekennzeichnet, daß die offene Strömungsquerschnittsfläche (64) des Auslasses des kreuzförmigen Strömungskanals (28) kleiner als die offene Strömungsquerschnittsfläche (58) des Einlasses ist, um hydraulische Verluste zwischen dem Einlaß und dem Auslaß des Wasserkreuzes (26) zu verteilen.

2. Kernbrennelement nach Anspruch 1, dadurch gekennzeichnet, daß das Wasserkreuz (26) Auslaßverschlußmittel (54) aufweist, welche den Auslaß des kreuzförmigen Strömungskanals (28) im wesentlichen verschließen und eine Mehrzahl von darin gebildeten Löchern (64) aufweist, die mit dem kreuzförmigen Strömungskanal (28) in Verbindung stehen.

3. Kernbrennelement nach Anspruch 2, dadurch gekennzeichnet, daß das Wasserkreuz (26) Einlaßverschlußmittel (52) aufweist, die den Einlaß des kreuzförmigen Strömungskanals (28) im wesentlichen verschließen und eine Anzahl darin gebildeter Löcher (58) aufweisen, die mit dem kreuzförmigen Strömungskanal (28) in Verbindung stehen, wobei die Löcher (64) in den Auslaßverschlußmitteln (54) eine kleinere Gesamtquerschnittsfläche als die Löcher (58) der Einlaßverschlußmittel (52) haben.

4. Kernbrennelement nach Anspruch 3, dadurch gekennzeichnet, daß die Einlaß- und Auslaßverschlußmittel (52, 54) perforierte Platten (56, 62) aufweisen, welche die Abstände zwischen den Blechteilen (34) am Einlaßende und Auslaßende des Wasserkreuzes (26) überdecken.

5. Kernbrennelement nach Anspruch 1, 2, 3 oder 4, dadurch gekennzeichnet, daß die offene Strömungsquerschnittsfläche des Auslasses in ausreichenden Maße kleiner als die offene Strömungsquerschnittsfläche des Einlasses ist, um einen positiven Druckgradienten in der Kühlmittel/Moderator-Strömung durch den kreuzförmigen Strömungskanal (28) innerhalb des Wasserkreuzes (26) relativ zu der Kühlmittel/Moderator-Strömung durch die einzelnen Teilkanäle (30) innerhalb des äußeren Strömungskastens (12) aufrechtzuerhalten.

6. Kernbrennelement nach Anspruch 5, dadurch gekennzeichnet, daß die Blechteile (34), welche den kreuzförmigen Strömungskanal (28) bilden, darin eingeformte Mittel (68) aufweisen, die es ermöglichen, daß etwas von dem Kühlmittel/Moderator innerhalb des kreuzförmigen Strömungskanals in die genannten Teilkanäle (30) an einer Stelle hindurchtritt, die näher am auslaßseitigen Ende als am einlaßseitigen Ende des Wasserkreuzes (26) liegt.

7. Kernbrennelement nach Anspruch 6, dadurch gekennzeichnet, daß das Brennstabteilbündel (46) in jedem der Teilkanäle (30) eine Anzahl von Haltegittern (48) aufweist, die in Längsrichtung des Brennstabteilbündels mit gegenseitigen Abständen angeordnet sind und die darin befindlichen Brennstäbe seitlich abstützen, und daß sich die genannte Stelle im Bereich a u, des dem Auslaßende des Wasserkreuzes (26) nächstliegenden Haltegitters befindet.

8. Kernbrennelement nach Anspruch 6 oder 7, dadurch gekennzeichnet, daß die Mittel (68) zum Ermöglichen des Austritts eines Teils des Kühlmittels/Moderators aus dem kreuzförmigen Strömungskanal in die Teilkanäle (30) des äußeren Strömungskastens (12) Löcher (68) sind, die in den Blechteilen (34) des Wasserkreuzes (26) gebildet sind.

9. Kernbrennelement nach Anspruch 8, dadurch gekennzeichnet, daß die Löcher (68) im wesentlichen miteinander in gleicher Höhe zwischen Einlaß- und Auslaßende des Wasserkreuzes (26) fluchtend angeordnet sind.

**Revendications**

1. Assemblage combustible nucléaire (10) comprenant un réseau de barres de combustible allongées (40) disposées côte à côte, un canal d'écoulement extérieur (12) entourant ledit réseau de barres de combustible pour diriger un fluide caloporteur/modérateur à travers ce réseau, et un conduit d'eau cruciforme (26) qui est disposé et s'étend axialement à l'intérieur du canal d'écoulement extérieur et comprend une pluralité de panneaux creux (32) s'étendant radialement depuis l'axe longitudinal du conduit cruciforme et divisant l'intérieur du canal d'écoulement extérieur en des canaux secondaires longitudinaux contenant chacun un sous-ensemble (46) de barres de combustible consistant en une fraction du nombre de barres de combustible dudit réseau, chacun desdits panneaux creux étant formé par une paire d'éléments (34) analogues à des feuilles' espacés et sensiblement parallèles, reliés les uns aux autres à leurs extrémités radialement extérieures et reliés à leurs extrémités radialement intérieures aux éléments adjacents analogues à des feuilles des panneaux adjacents respectifs de manière à définir un canal cruciforme d'écoulement de caloporteur/modérateur, s'étendant d'un bout à l'autre du conduit d'eau cruciforme et comportant une entrée (52) et une sortie (54) à ses extrémités opposées, caractérisé en ce que la sortie du canal d'écoulement cruciforme (28) a une superficie (64) de section droite d'ouverture d'écoulement inférieure à la superficie (58) de section droite d'ouverture d'écoulement de ladite entrée de manière à répartir les pertes hydrauliques entre ladite entrée et ladite sortie du conduit d'eau cruciforme (26).

2. Assemblage combustible nucléaire selon la revendication 1, caractérisé en ce que le conduit d'eau cruciforme (26) comprend un moyen (54) de fermeture de sortie fermnt essentiellement la sortie du canal d'écoulement cruciforme (28) et dans lequel sont formés une pluralité de trous (64) qui communiquent avec le canal d'écoulement cruciforme (28).

3. Assemblage combustible nucléaire selon la revendication 2, caractérisé en ce que le conduit d'eau cruciforme (26) comprend un moyen (52) de fermeture d'entrée fermant essentiellement l'entrée du canal d'écoulement cruciforme (28) et dans lequel sont formés une pluralité de trous (58) qui communiquent avec le canal d'écoulement cruciforme (28), les trous (64) du moyen (54) de fermeture de sortie présentant une superficie totale de section droite d'écoulement inférieure à celle des trous (58) du moyen (52) de fermeture d'entrée.

4. Assemblage combustible nucléaire selon la revendication 3, caractérisé en ce que les moyens (52, 54) de fermeture d'entrée et de sortie comprennent des plaques perforées (56, 62) s'étendant sur les espaces compris entre lesdits éléments (34) analogues à des feuilles, adjacents aux extrémités d'entrée et de sortie du conduit d'eau cruciforme (26).

5. Assemblage combustible nucléaire selon la revendication 1, 2, 3 ou 4, caractérisé en ce que la superficie de section droite d'ouverture d'écoulement de ladite sortie est suffisamment inférieure à la superficie de section droite d'ouverture d'écoulement de ladite entrée pour maintenir un gradient de pression positif dans l'écoulement de caloporteur/modérateur à travers le canal d'écoulement cruciforme (28) à l'intérieur du conduit d'eau cruciforme (26) par rapport à l'écoulement de caloporteur/modérateur à travers les canaux secondaires respectifs (30) à l'intérieur du canal d'écoulement extérieur (12).

6. Assemblage combustible nucléaire selon la revendication 5, caractérisé en ce que dans les éléments (34) analogues à des feuilles, définissant le canal d'écoulement cruciforme (28), sont formés des moyens (68) pour permettre à une certaine partie du caloporteur/modérateur se trouvant à l'intérieur du canal d'écoulement cruciforme de pénétrer dans les canaux secondaires (30) à un endroit situé plus près de l'extrémité extérieure que de l'extrémité intérieure du conduit d'eau cruciforme (26).

7. Assemblage combustible nucléaire selon la revendicatioun 6, caractérisé en ce que le sous-ensemble (46) de barres de combustible de chaque canal secondaire (30) comprend une pluralité de grilles de support (48) espacées les unes des autres dans la direction longitudinale du sous-ensemble de barres de combustible et supportant latéralement les barres de combustible à l'intérieur de ce dernier, ledit endroit étant adjacent à la grille de support située le plus près de l'extrémité de sortie du conduit d'eau cruciforme (26).

8. Assemblage combustible nucléaire selon la revendication 6 ou 7, caractérisé en ce que les moyens (68) permettant à une certaine partie du caloporteur/modérateur de passer du canal d'écoulement cruciforme dans les canaux secondaires (30) du canal d'écoulement extérieur (12) sont des trous (68) formés dans les éléments (34) analogues à des feuilles du conduit d'eau cruciforme (26).

9. Assemblage combustible nucléaire selon la revendication 8, caractérisé en ce que les trous (68) sont sensiblement alignés les uns avec les autres au même niveau entre les extrémités d'entrée et de sortie du conduit d'eau cruciforme (26).

EP  0 200 111  B1

FIG.1

EP 0 200 111 B1

FIG. 2

FIG. 3

2

FIG.4

FIG.5

FIG.6

4

FIG. 7